# EUROPÄISCHE PATENTSCHRIFT

(11) **EP 1 783 022 B1**
(45) Veröffentlichungstag und Bekanntmachung des Hinweises auf die Patenterteilung: **24.02.2010**
(21) Anmeldenummer: 06123647.7
(22) Anmeldetag: 08.11.2006
(51) Int. Cl.: B60W 30/02

(54) **Fahrdynamikregelungssystem mit Lastwechsel-Funktion**
Driving dynamics control system with load transfer function
Contrôle dynamique de conduite par transfert de charge

(30) Priorität: 08.11.2005 DE 102005053116
(43) Veröffentlichungstag der Anmeldung: 09.05.2007
(73) Patentinhaber: ROBERT BOSCH GMBH, 70442 Stuttgart (DE)
(72) Erfinder: Schlemmer, Martin, 74232 Abstatt (DE)

(56) Entgegenhaltungen:
- EP-A- 1 201 520
- DE-A1- 10 128 690
- DE-A1- 19 515 061
- DE-A1- 19 754 898
- GB-A- 2 411 213
- US-A1- 2002 013 645
- HONGTEI ERIC TSENG ET AL: "The Development of Vehicle Stability Control at Ford" IEEE / ASME TRANSACTIONS ON MECHATRONICS, IEEE SERVICE CENTER, PISCATAWAY, NJ, US, Bd. 4, Nr. 3, September 1999 (1999-09), XP011034524 ISSN: 1083-4435

## Beschreibung

Die Erfindung betrifft ein Verfahren zum Stabilisieren eines Fahrzeugs in einer fahrdynamischen Grenzsituation gemäß dem Oberbegriff des Patentanspruchs 1.

Fahrdynamikregelungssysteme, wie z. B. ESP, dienen dazu, die Kontrollierbarkeit von Kraftfahrzeugen in kritischen Fahrsituationen, wie z.B. beim Über- oder Untersteuern in Kurvenfahrten zu verbessern bzw. das Fahrzeug zu stabilisieren und in einem kontrollierten Zustand zurück zu führen. Bei Erkennen einer kritischen Fahrsituation greifen diese Systeme je nach Ausführung mittels der Fahrzeugbremsen, der Motorsteuerung, einer aktiven Lenkung oder anderer Stellglieder in den Fahrbetrieb ein, um das Fahrzeug zu stabilisieren.

Zur Vermeidung des Untersteuerns bei Kurvenfahrten sind im Wesentlichen zwei verschiedene Regelstrategien bekannt: Eine erste Strategie besteht darin, durch Bremseingriffe an einzelnen Rädern des Fahrzeugs, insbesondere am kurveninneren Hinterrad, ein zusätzliches Giermoment um die Hochachse des Fahrzeugs zu erzeugen, das dem Untersteuern entgegen wirkt und das Fahrzeug zurück in Richtung der Kurveninnenseite führt. Eine zweite, zusätzlich durchführbare Strategie besteht darin, das Fahrzeug durch Bremseingriffe oder durch Reduktion des Antriebsmoments insgesamt zu verzögern. Mit niedrigerer Fahrgeschwindigkeit reduziert sich die auf das Fahrzeug wirkende Querbeschleunigung, so dass insbesondere die Vorderräder besser greifen und die Untersteuertendenz geringer wird.

Aus der EP 1201520 A1 ist ein Fahrdynamikregelungssystem bekannt, welches die Gierrate durch unabhängige Ansteuerung der Radbremsen regelt. Der Eingriff einer ersten Untersteuerregelung gegen eine Untersteuertendenz wird dann durchgeführt, wenn die Untersteuertendenz des Fahrzeugs einen vorgegebenen Wert überschreitet. Weiter wird ein Eingriff einer zweiten Untersteuerregelung, deren Eingriffstärke geringer als bei der ersten Untersteuerregelung ist, dann durchgeführt, wenn die Ist-Gierrate sich nicht in vorgegebenem Maße abhängig von einer Änderung des Lenkradwinkels ändert. Dadurch wird für den Fahrer das Stabilitäts- und Steuergefühl bzgl. des Fahrzeugs verbessert.

Die Merkmale der Oberbegriffe der unabhängigen Ansprüche sind der EP 1 201 520 A1 entnommen. EP 1 201 520 A1 ist als nächstliegenden Stand der Technik zu sehen.

Die bekannten Strategien sind in vielen Fällen ausreichend, um ein in einen unkontrollierten Zustand geratenes Fahrzeug wieder zu stabilisieren. Sie können jedoch weiter optimiert werden.

Es ist daher die Aufgabe der vorliegenden Erfindung, die Wirkung von Fahrdynamikregelungssystemen insbesondere beim Untersteuern des Fahrzeugs weiter zu verbessern.

Gelöst wird diese Aufgabe gemäß der Erfindung durch die im Patentanspruch 1 angegebenen Merkmale. Weitere Ausgestaltungen der Erfindung sind Gegenstand von Unteransprüchen.

Ein wesentlicher Aspekt der Erfindung besteht darin, einen dynamischen Lastwechsel herbeizuführen, bei dem das Gewicht des Fahrzeugs sprungartig von der Hinterachse auf die Vorderachse verlagert wird. Dadurch steigt die Radaufstandskraft an den Vorderrädern, die somit eine höhere Seitenführungskraft aufnehmen können. Die Radaufstandskraft an den Hinterrädern sinkt zwar entsprechend, dies ist aber im Falle des Untersteuerns meist nicht kritisch. Eine Untersteuertendenz des Fahrzeugs kann dadurch wesentlich reduziert werden. Um den Lastwechsel herbeizuführen, wird erfindungsgemäß ein Stellglied, mit dem die Fahrgeschwindigkeit des Fahrzeugs verringert werden kann, sprungartig (bzw. mit maximalem Gradienten) betätigt. Durch die ruckartige Verzögerung erfährt das Fahrzeug einen hochdynamischen Lastwechsel von den Hinterrädern auf die Vorderräder mit dem vorstehend beschriebenen Effekt.

Geeignete Stellglieder für die Fahrzeug-Verzögerung sind insbesondere die Fahrzeugbremsen, die Motorsteuerung des Verbrennungsmotors und/oder eine Steuerung für eine elektrische Maschine.

Bei Verwendung der Fahrzeugsbremsen wird vorzugsweise wenigstens ein kurzer, pulsförmiger Bremseingriff durchgeführt. Die Dauer des Bremseingriffs ist dabei vorzugsweise wesentlich geringer als die Dauer des gesamten Regeleingriffs (bei dem z. B. eine oder mehrere Radbremsen, ein Lenksteller oder ein anderes Stellglied betätigt werden) und dauert insbesondere weniger als 1 s, vorzugsweise weniger als eine 0,5 s. Falls im Rahmen der Fahrdynamikregelung bereits eine oder mehrere Radbremsen mit Druck beaufschlagt werden, wird der an der jeweiligen Radbremse anliegende Druck vorzugsweise kurzfristig überhöht.

Der Bremseingriff erfolgt vorzugsweise symmetrisch auf beiden Seiten des Fahrzeugs, d.h. er ist Giermomenten neutral. Das Fahrzeug wird dadurch nicht zusätzlich angestellt.

Der erfindungsgemäße Bremseingriff wird vorzugsweise überwiegend oder ausschließlich an den Rädern der Hinterachse des Fahrzeugs durchgeführt. Die Vorderräder bleiben dagegen vorzugsweise unterbremst. Dadurch wird vermieden, dass die Vorderräder, die für das Fahrverhalten bei Kurvenfahrt besonders kritisch sind, weiter an Seitenführungspotential verlieren.

Die pulsförmige Ansteuerung der Radbremsen kann in zeitlichen Abständen mehrfach wiederholt werden.

Bei Verwendung der Motorsteuerung als Stellglied wird das Motormoment sprungartig (stufenartig) auf sehr kleine Werte gegen Null oder z.B. auch auf negative Werte (Schleppmoment) reduziert. Eine sprungartige Reduktion des Motormoments bewirkt ebenfalls einen hochdynamischen Lastwechsel von den Hinterrädern auf die Vorderräder des Fahrzeugs.

Die Momenten-Reduktion kann in einer einzigen Stufe oder in mehreren aufeinander folgenden kleineren Stufen durchgeführt werden.

Bei Hybridfahrzeugen, die neben dem Verbrennungsmotor auch eine elektrische Maschine aufweisen, kann eine Fahrzeugverzögerung auch durch entsprechende Ansteuerung der elektrischen Maschine erfolgen. In diesem Fall wird das Moment der elektrischen Maschine ähnlich wie beim Verbrennungsmotor sprungartig reduziert bzw. ein Generatorbetrieb eingestellt, in dem die Maschine ein Schleppmoment erzeugt.

Die erfindungsgemäße Lastwechsel-Funktion wird vorzugsweise aktiviert, wenn die Untersteuertendenz des Fahrzeugs einen vorgegebenen Schwellenwert überschreitet.

Die Erfindung wird nachstehend anhand der beigefügten Figuren beispielhaft näher erläutert. Es zeigen:
Fig. 1 eine schematische Blockdarstellung eines Fahrdynamikregelungssystems;
Fig. 2a und 2b die Kraftverhältnisse an den Rädern eines Fahrzeugs vor und nach einem Regeleingriff mit Lastwechsel-Funktion; und
Fig. 3a-3c den Verlauf des Bremsdrucks und des Motormoments bei einem Regeleingriff mit Lastwechsel-Funktion.

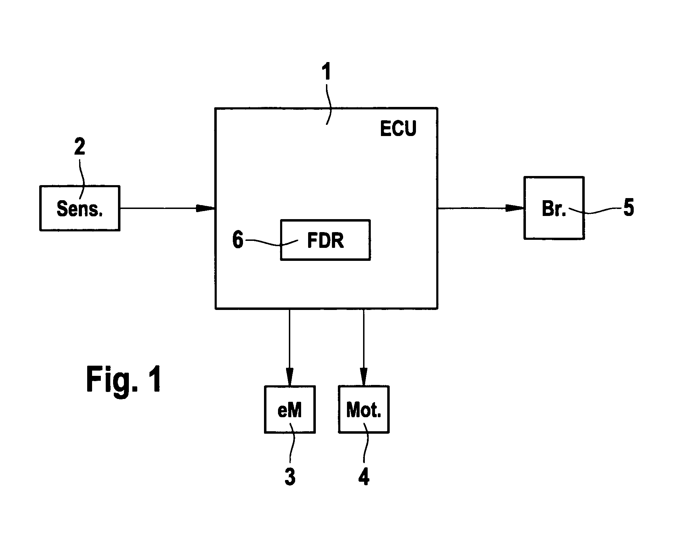

Fig. 1 zeigt den schematischen Aufbau eines Fahrdynamikregelungssystems, wie er im Wesentlichen aus dem Stand der Technik bekannt ist. Das System umfasst ein Steuergerät 1 mit einem Regelalgorithmus 6 (FDR), eine Sensorik 2 zur Überwachung des Fahrzustands und verschiedene Stellglieder 3-5. Der Algorithmus 6 dient dazu, ein untersteuerndes Fahrzeug zu stabilisieren und in einen kontrollierten Zustand zurück zu führen. Die Sensoren 2 umfassen z. B. Rad-Drehzahlsensoren, Beschleunigungssensoren, Gierratensensoren, etc..

Das Steuergerät 1 verarbeitet die Sensorsignale und ermittelt daraus verschiedene Zustandsgrößen, die das Ist- bzw. Soll-Verhalten des Fahrzeugs beschreiben. Wenn aufgrund der Sensorsignale eine kritische Fahrsituation erkannt wird, greift das Steuergerät mittels eines oder mehrerer der Stellglieder 3-5 in den Fahrbetrieb ein. Wahlweise können auch mehr oder weniger Stellglieder vorgesehen sein. Im vorliegenden Beispiel kann der Fahrdynamikregler 6 auf eine elektrische Maschine 3 (bei Hybridfahrzeugen), die Motorsteuerung 4 und/oder wenigstens eine der Radbremsen 5 zugreifen.

Der Fahrdynamikregler 6 ist hier derart ausgelegt, dass das Steuergerät 1 nach dem Erkennen einer kritischen Fahrsituation wenigstens eines der Stellglieder 3-5 sprungartig bzw. nahezu sprungartig bzw. mit sehr rasch anwachsender Intensität betätigt, um das Fahrzeug abrupt zu verzögern. Dadurch kommt es zu einem hochdynamischen Lastwechsel, bei dem die Vorderräder stärker belastet werden und somit eine höhere Querbeschleunigung bzw. Querkraft aufnehmen können. Das Fahrzeug kann dadurch insbesondere beim Untersteuern während einer Kurvenfahrt besser unter Kontrolle gehalten werden.

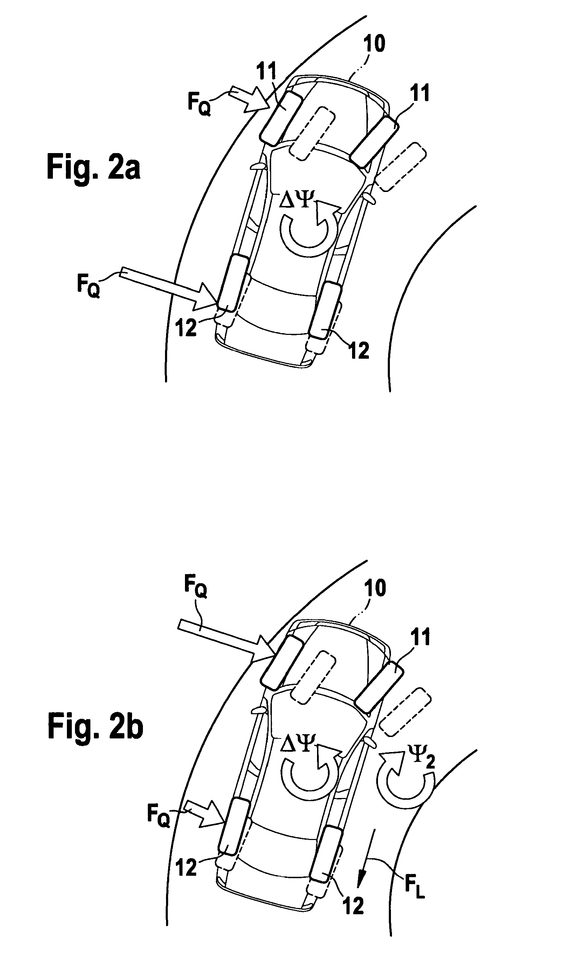

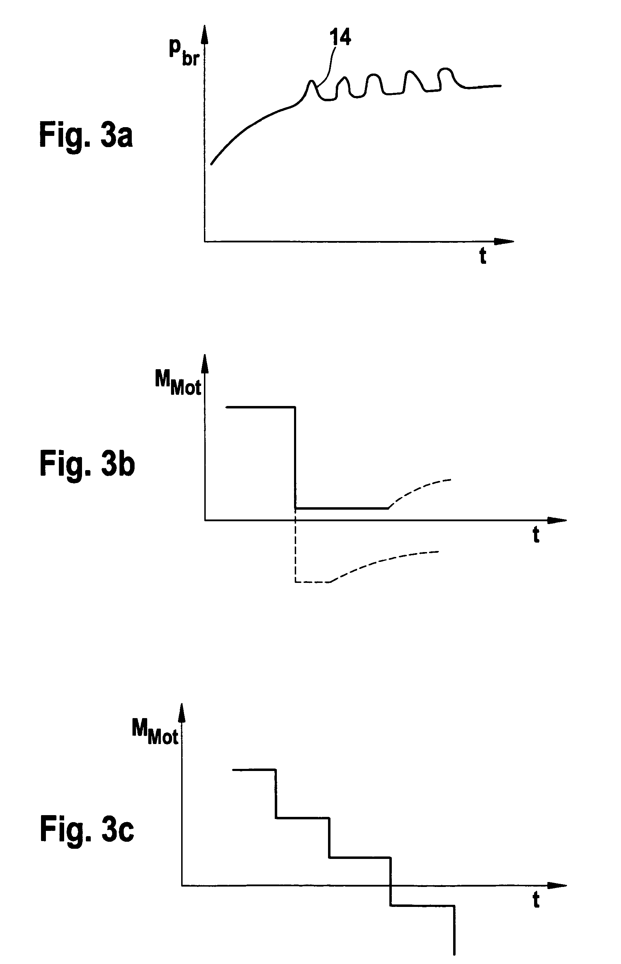

Die Regelstrategie des Fahrdynamikreglers 6 wird im Folgenden anhand der Fig. 2 und 3 näher erläutert. Fig. 2a, 2b zeigen die an den Rädern eines Fahrzeugs 10 wirkenden Querkräfte F_{Q} bei einer Kurvenfahrt, in der das Fahrzeug 10 untersteuert. Dabei ist in Fig. 2a ein Zustand kurz vor dem Eingreifen der Fahrdynamikregelung 6 und in Fig. 2b der Zustand nach dem Eingreifen der Fahrdynamikregelung dargestellt.

Beim Untersteuern zeigt das Fahrzeug 10 eine Giermoment-Abweichung ΔΨ um die Hochachse, die schematisch durch einen gekrümmten Pfeil dargestellt ist. Das Fahrzeug rutscht über die Vorderräder 11 in Richtung der Kurvenaußenseite. Die an den Vorderrädern 11 wirkenden Querkräfte F_{Q} sind daher kleiner als an den Hinterrädern 12. Dies ist durch unterschiedlich lange Pfeile F_{Q} schematisch dargestellt.

Wenn die Untersteuertendenz (die z. B. im Steuergerät 1 berechnet wird) einen vorgegebenen Schwellenwert SW überschreitet, greift der Regler 6 in den Fahrbetrieb ein, indem er ein oder mehrere der Stellglieder 3-5 ansteuert. In einem ersten Ausführungsbeispiel reduziert der Regler 6 sprungartig das Motormoment, wie es z. B. in Fig. 3b dargestellt ist. Das Motormoment Mₘₒₜ kann auf geringe Werte nahe Null oder auf negative Werte reduziert werden. Nach dem Momentensprung kann das Motormoment weiter auf dem niedrigen Niveau gehalten oder wieder angehoben werden, um einem zu hohen Radschlupf entgegen zu wirken.

Fig. 3c zeigt einen alternativen Momentenverlauf, bei dem das Motormoment in mehreren Stufen sprungartig reduziert wird. Andere Momentenverläufe sind ebenfalls denkbar.

Fig. 2b zeigt die nach dem Regeleingriff wirkenden Kräfte und Momente am Fahrzeug 10. Durch den Bremseingriff am kurveninneren Hinterrad 10 (siehe Pfeil F_{L}) wird ein Giermoment Ψ₂ erzeugt, das dem Untersteuerverhalten entgegenwirkt. Zusätzlich bewirkt die sprungartige Reduktion des Motormoments eine Erhöhung der Radaufstandskraft an den Vorderrädern 11, wodurch gleichzeitig das Seitenführungspotential der Vorderräder 11 steigt und das der Hinterräder 12 sinkt. Dies ist durch unterschiedlich lange Pfeile F_{Q} für die Querkräfte angedeutet.

Anstelle oder zusätzlich zur Reduzierung des Motormoments könnte der Fahrdynamikregler 6 auch in das Bremssystem des Fahrzeugs eingreifen, um eine dynamische Lastverschiebung zu bewirken. Fig. 3a zeigt beispielhaft eine kurze, pulsförmige Modulation des Bremsdrucks p_{br}, mit der die gewünschte Lastverschiebung erreicht werden kann. Die einzelnen Pulse sind mit 14 bezeichnet. Erfindungsgemäß können ein oder mehrere Pulse 14 ausgeübt werden.

Der Bremseingriff wird überwiegend oder ausschließlich an den Hinterrädern 12 durchgeführt. Die Vorderräder bleiben dagegen unterbremst. Dadurch wird vermieden, dass die Vorderräder, die für das Fahrverhalten bei Kurvenfahrt besonders kritisch sind, an Seitenführungspotential verlieren.

## Patentansprüche

1. Verfahren zum Stabilisieren eines Fahrzeugs (10) in einer Fahrsituation, in der das Fahrzeug (10) untersteuert, mit Hilfe eines Fahrdynamikreglers (6), der das Fahrzeug (10) durch Ansteuerung wenigstens eines Stellglieds (3-5) stabilisieren kann, **dadurch gekennzeichnet, dass**
- der Fahrdynamikregler (6) das Motormoment (Mₘₒₜ) des Verbrennungsmotors oder einer elektrischen Maschine (3) sprungartig auf einen Wert von ungefähr Null oder auf einen negativen Wert reduziert oder
- der Fahrdynamikregler (6) wenigstens einen kurzen, pulsförmigen, Giermomenten neutralen Bremseingriff (14) an beiden Hinterrädern (12) durchführt, um das Fahrzeug (10) zu verzögern und damit eine dynamische Lastverschiebung von den Hinterrädern (12) auf die Vorderräder (11) zu bewirken

2. Verfahren nach einem der vorhergehenden Ansprüche, **dadurch gekennzeichnet, dass** der Fahrdynamikregler (6) einen bestehenden Bremsdruck (p) kurzfristig überhöht.

3. Verfahren nach einem der vorhergehenden Ansprüche, dass die Dauer eines pulsförmigen Bremseingriffs (14) wesentlich geringer ist als die Dauer einer Regelphase zur Stabilisierung eines Fahrzeugs (10).

4. Verfahren nach einem der vorhergehenden Ansprüche, **dadurch gekennzeichnet, dass** die Dauer eines Bremseingriffs kürzer ist als 1s, insbesondere kürzer als eine 0,5s.

5. Vorrichtung zur Durchführung des Verfahrens nach einem der vorhergehenden Ansprüche.

## Claims

1. Method for stabilizing a vehicle (10) in a driving situation in which the vehicle (10) understeers, by means of a driving dynamics controller (6) which can stabilize the vehicle (10) by actuating at least one actuator element (3-5), **characterized in that**
- the driving dynamics controller (6) suddenly reduces the engine torque (Mₘₒₜ) of the internal combustion engine or of an electric machine (3) to a value of approximately zero or to a negative value, or
- the driving dynamics controller (6) carries out at least a short, pulse-shaped braking intervention (14), which is neutral in terms of yaw moments, at both rear wheels (12) in order to decelerate the vehicle (10) and therefore bring about a dynamic load shift from the rear wheels (12) to the front wheels (11).

2. Method according to one of the preceding claims, **characterized in that** the driving dynamics controller (6) briefly increases an existing brake pressure (p).

3. Method according to one of the preceding claims, **characterized in that** the duration of a pulse-shaped braking intervention (14) is significantly shorter than the duration of a closed-loop control phase for stabilizing a vehicle (10).

4. Method according to one of the preceding claims, **characterized in that** the duration of a braking intervention is shorter than 1 s, in particular shorter than 0.5 s.

5. Device for carrying out the method according to one of the preceding claims.

## Revendications

1. Procédé de stabilisation d'un véhicule (10) dans une situation de conduite dans laquelle le véhicule (10) est en sous-virage, à l'aide d'un régulateur dynamique du mouvement de déplacement (6) qui peut stabiliser le véhicule (10) en commandant au moins un actionneur (3-5), **caractérisé en ce que**
- le régulateur dynamique du mouvement de déplacement (6) réduit brutalement le couple moteur (Mₘₒₜ) du moteur à combustion interne ou d'une machine électrique (3) à une valeur approximativement égale à zéro ou à une valeur négative ou
- le régulateur dynamique du mouvement de déplacement (6) effectue au moins une courte intervention de freinage (14) impulsionnelle à couple de lacet neutre sur les deux roues arrière (12) afin de ralentir le véhicule (10) et provoquer ainsi un déplacement dynamique de la charge des roues arrière (12) sur les roues avant (11).

2. Procédé selon l'une des revendications précédentes, **caractérisé en ce que** le régulateur dynamique du mouvement de déplacement (6) accroît excessivement pendant un court instant une pression de freinage (p) existante.

3. Procédé selon l'une des revendications précédentes, **caractérisé en ce que** la durée d'une intervention de freinage (14) impulsionnelle est considérablement inférieure à la durée d'une phase de régulation destinée à stabiliser un véhicule (10).

4. Procédé selon l'une des revendications précédentes, **caractérisé en ce que** la durée d'une intervention de freinage est inférieure à 1 s, notamment inférieure à 0,5 s.

5. Dispositif pour mettre en oeuvre le procédé selon l'une des revendications précédentes.
